# EUROPEAN PATENT APPLICATION

(11) **EP 1 487 145 A2**
(43) Date of publication of application: **15.12.2004**
(21) Application number: 04006369.5
(22) Date of filing: 17.03.2004
(51) Int. Cl.: H04L 1/18, H04L 1/00

(54) **Communication apparatus using hybrid ARQ**

(30) Priority: 13.06.2003 JP 2003169707
(71) Applicant: Kabushiki Kaisha Toshiba, Tokyo (JP)
(72) Inventor: Nonin, Katsuya, Toshiba Corporation, Minato-ku, Tokyo 105-8001 (JP)
(74) Representative: HOFFMANN - EITLE

(57) **Abstract**

A communication apparatus for receiving data transmitted by an apparatus of a communication partner, according to the present invention, includes receiving means for receiving the data, error-correcting means (42) for error-correcting the data received by the receiving means, storing means (43) for storing the data error-corrected by the error-correcting means (42), determining means for determining whether the data error-corrected by the error-correcting means (42) includes an error, requesting means for requesting the apparatus of the communication partner to retransmit the data if the determining means determines that the data includes an error, and controlling means for controlling chase combining of the data received by the receiving means and retransmitted from the apparatus of the communication partner, with the data stored in the storing means (43), and inputting the data obtained by the chase combining to the error-correcting means (42).

## Description

This invention relates to a communication apparatus for a radio communication system such as a mobile telephone system.

A conventional communication terminal apparatus available in a radio communication system, receiving a packet including an error, has requested a transmitting side to retransmit the packet and has received again the packet including the same information.

However, if the signal-to-interference ratio (SIR) of a propagation path is deteriorated, the request of retransmission and the reception are repeated and the throughput is thereby deteriorated.

- For this reason, application of combination of FEC (Forward Error Correction) and ARQ (Automatic Repeat Request) or what is called hybrid ARQ, to the radio communication system such as a W-CDMA system based on, for example, 3GPP (3rd Generation Partnership Project) has been studied.

In the hybrid ARQ, data to be transmitted is encoded by FEC. If the packet received by the receiving side includes an error, the receiving side requests the transmitting side to retransmit the packet and performs chase combining, i.e. synthesis of bit values of the previously received packet with bit values of the retransmitted packet.

In the conventional hybrid ARQ, however, the previously received packet is synthesized with the retransmitted packet. Thus, the effect of improved SIR cannot be obtained in accordance with propagation circumstances, and the throughput may be deteriorated by increasing the retransmission frequency.

The present invention has been accomplished to solve the above-described problem. The object of the present invention is to provide a communication apparatus capable of enhancing the error-correcting ability and restricting the increase in the retransmission frequency.

According to an aspect of the present invention, there is provided a communication apparatus capable of receiving data. The communication apparatus comprises receiving means for receiving the data, error-correcting means for error-correcting the data received by the receiving means, storing means for storing the data error-corrected by the error-correcting means, determining means for determining whether the data error-corrected by the error-correcting means includes an error, requesting means for requesting the apparatus of the communication partner to retransmit the data if the determining means determines that the data includes an error, and controlling means for controlling chase combining of the data received by the receiving means and retransmitted from the apparatus of the communication partner, with the data stored in the storing means, and inputting the data obtained by the chase combining to the error-correcting means.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagram showing a system using a communication apparatus of the present invention;
FIG. 2 is a block diagram showing a configuration of an encoding unit of a base station shown in FIG. 1;
FIG. 3 is a block diagram showing a configuration of a decoding unit of a mobile terminal shown in FIG. 1;
FIG. 4 is a block diagram showing a configuration of an FB decoder shown in FIG. 3;
FIG. 5 is a block diagram showing a configuration of the FB decoder shown in FIG. 3;
FIG. 6 is a block diagram showing a configuration of the FB decoder shown in FIG. 3;
FIG. 7 is a block diagram showing a configuration of the FB decoder shown in FIG. 3;
FIG. 8 is a block diagram showing a configuration of the FB decoder shown in FIG. 3;
FIG. 9 is a block diagram showing a configuration of the FB decoder shown in FIG. 3;
FIG. 10 is a block diagram showing a configuration of the FB decoder shown in FIG. 3;
FIG. 11 is a block diagram showing a configuration of the decoding unit of the mobile terminal shown in FIG. 1;
FIG. 12 is a block diagram showing a configuration of an FB decoder shown in FIG. 11;
FIG. 13 is a block diagram showing a configuration of the FB decoder shown in FIG. 11;
FIG. 14 is a block diagram showing a configuration of the FB decoder shown in FIG. 11;
FIG. 15 is a block diagram showing a configuration of the FB decoder shown in FIG. 11;
FIG. 16 is a block diagram showing a configuration of the FB decoder shown in FIG. 11;
FIG. 17 is a flowchart of operations of an FB decoder shown in FIG. 16;
FIGS. 18A to 18D are illustrations of transition of information bits processed by the FB decoder shown in FIG. 16;
FIG. 19 is a block diagram showing a configuration of the decoding unit of the mobile terminal shown in FIG. 1;
FIG. 20 is a block diagram of a configuration of a depuncturing/serial-parallel converting unit shown in FIG. 19; and
FIGS. 21A to 21F are illustrations of transition of information bits processed by a decoding unit shown in FIG. 19.

A communication apparatus used in a W-CDMA system based on 3GPP will be described below as a communication apparatus according to an aspect of the present invention. In the drawings, like elements are denoted throughout by like or similar reference numbers.

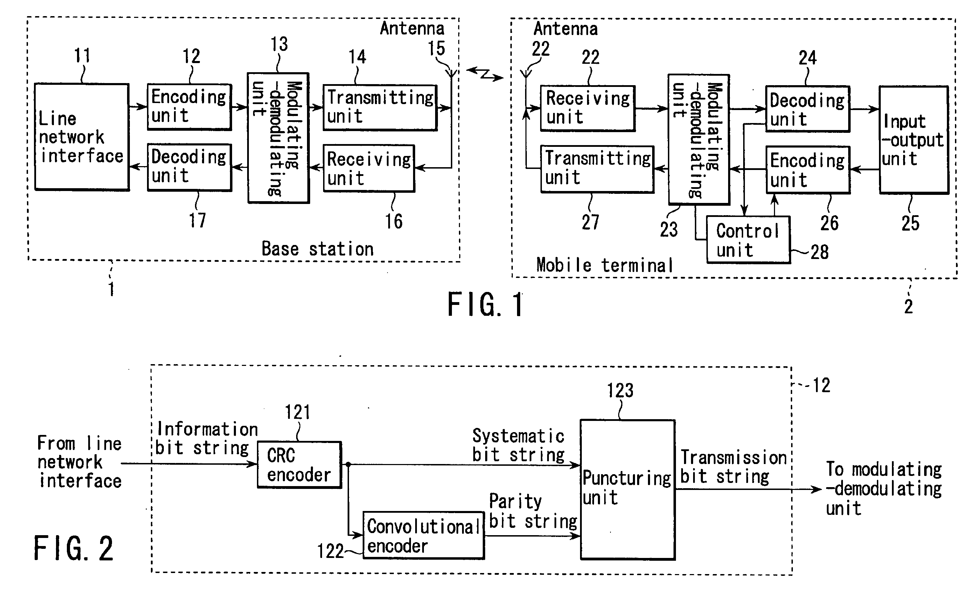

FIG. 1 shows configurations of a base station 1 and a mobile terminal 2 used in this system.

In the following explanations, a packet which has not been retransmitted from the base station 1 to the mobile terminal 2 but is transmitted for the first time is called an initial packet. A packet which is retransmitted from the base station 1 to the mobile terminal 2 as the packet received by the mobile terminal 2 includes an error, is called a retransmitted packet. The initial packet and the retransmitted packet include the same data.

The base station 1 comprises a line network interface 11 and is thereby connected to a circuit network (not shown). The data obtained from the line network by the line network interface 11 is encoded by an encoding unit 12. A configuration of the encoding unit 12 is shown in FIG. 2.

The encoding unit 12 comprises a CRC encoder 121, a convolutional encoder 122 and a puncturing unit 123. An information bit string obtained from the line network interface 11 is encoded to a systematic bit string and a parity bit string by the CRC encoder 121 and the convolutional encoder 122.

The systematic bit string and the parity bit string are subjected to puncturing by the puncturing unit 123, which thereby generates a transmission bit string. The systematic bit string is the information which is to be transmitted to the mobile terminal 2. The parity bit string is the information which is added to correct the error generated in the systematic bit string during the transmission.

The transmission bit string is used for modulation of a carrier wave in a modulating-demodulating unit 13. A modulation signal thus obtained is up-converted by a transmitting unit 14 into a high-frequency signal, which is radiated from an antenna 15.

On the other hand, a radio signal received by the antenna 15 is down-converted into an IF signal by a receiving unit 16. The IF signal is demodulated by the modulating-demodulating unit 13. A reception bit string obtained from the demodulation is decoded by a decoding unit 17 into data, which is transmitted to the line network through the line network interface 11.

In the mobile terminal 2, data which is input through an input-output unit 25 is encoded by an encoding unit 26. In other words, the data is subjected to channel coding. The encoded data is used for modulation of a carrier wave at a modulating-demodulating unit 23. A modulated signal thus obtained is up-converted by a transmitting unit 27 into a high frequency signal, which is radiated from an antenna 21. The input-output unit 25 plays a role of inputting and outputting encoded data such as speech data, image data and the like and the data to be decoded.

A radio signal received by the antenna 21 is down-converted into an IF signal by a receiving unit 22. The IF signal is demodulated by the modulating-demodulating unit 23. A reception bit string obtained from the demodulation is subjected to the FEC by a decoding unit 24 and is output through the input-output unit 25.

A control unit 28 controls each unit of the mobile terminal 2. For example, if the decoding unit 24 detects an error in the received data, the control unit 28 controls the encoding unit 26 and the modulating-demodulating unit 23 to request the base station 1 to retransmit the data.

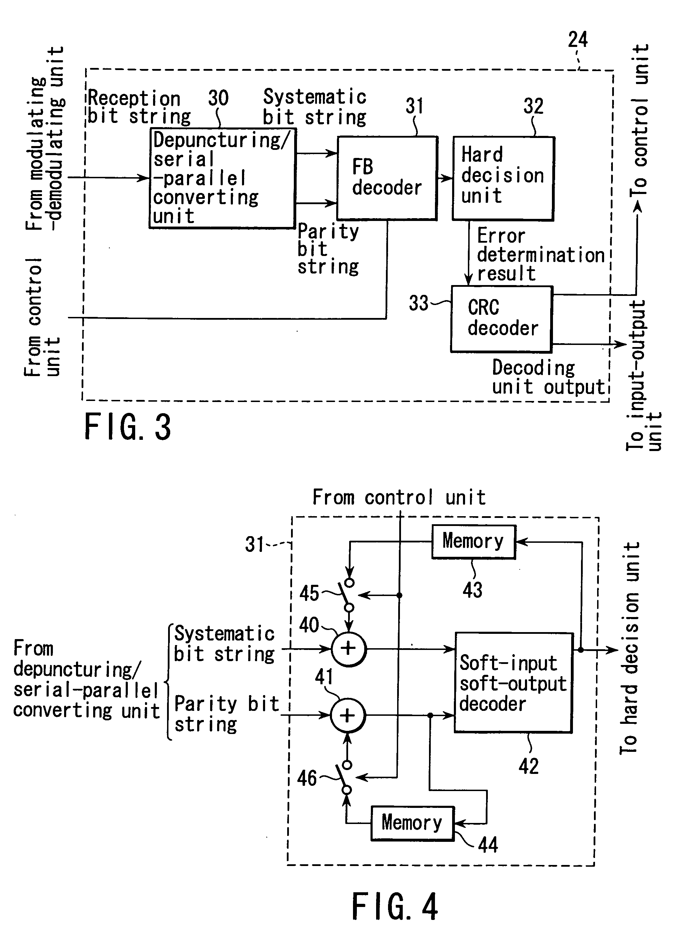

FIG. 3 shows a configuration of the decoding unit 24. The decoding unit 24 comprises a depuncturing/serial-parallel converting unit 30, a FB (feedback) decoder 31, a hard decision unit 32 and a CRC decoder 33.

The depuncturing/serial-parallel converting unit 30 divides the reception bit string which is input from the modulating-demodulating unit 23 into the systematic bit string and the parity bit string and outputs each of them to the FB decoder 31.

In accordance with the instruction from the control unit 28, the FB decoder 31 error-corrects and decodes the systematic bit string on the basis of the parity bit string. In addition, if an error is detected by the CRC decoder 33, the FB decoder 31 executes chase combining of the error-corrected bit string with the bit string of the retransmitted packet, and error- corrects and decodes the systematic bit string on the basis of the result of chase combining.

FIG. 4 shows a configuration of the FB decoder 31. The FB decoder 31 comprises adders 40, 41, a soft-input soft-output decoder 42, memories 43, 44, and switches 45, 46.

If the reception bit string is input on the basis of the initial packet, the switches 45 and 46 are set in an opened state by the control unit 28. Thus, nothing is added to the systematic bit string or the parity bit string at the adders 40, 41 and the bit string and the parity bit string are input to the soft-input soft-output decoder 42. Moreover, the parity bit string is also output and stored in the memory 44.

On the basis of the parity bit string which is output from the adder 41, the soft-input soft-output decoder 42 error- corrects the systematic bit string which is output from the adder 40 and decodes the error-corrected systematic bit string. The decoding result is output to the hard decision unit 32 and is also output and stored in the memory 43.

If the reception bit string is input on the basis of the retransmitted packet, the switches 45 and 46 are set in a shorted state by the control unit 28. Thus, the systematic bit string and the parity bit string are added to the bit string stored in the memory 43 and the bit string in the memory 44, respectively, by unit of corresponding bit and are input to the soft-input soft-output decoder 42. Moreover, the parity bit string is also output and stored in the memory 44.

On the basis of the parity bit string which is output from the adder 41, the soft-input soft-output decoder 42 error-corrects the systematic bit string which is output from the adder 40, and decodes the error-corrected systematic bit string. The decoding result is output to the hard decision unit 32 and is also output and stored in the memory 43.

The hard decision unit 32 executes hard decision of the bit string which is output from the soft-input soft-output decoder 42 and outputs the decision result to the CRC decoder 33.

The CRC decoder 33 executes the CRC decoding of the output from the hard decision unit 32, executes the hard decision, and outputs the decision result to the control unit 28. If no error is found, the CRC decoder 33 outputs the receive data obtained from the CRC decoding to the input-output unit 25.

Next, operations of the system will be explained below.

First, in the base station 1, the line network interface 11 receives the information bit string which should be transmitted from the line network to the mobile terminal 2. The received information bit string is CRC-encoded by the CRC encoder 121. The parity bit string is generated from the systematic bit string by convolutional encoder 122.

The systematic bit string and parity bit string thus generated are subjected to puncturing and serial-parallel conversion by the puncturing unit 123 to generate the transmission bit string. The puncturing may not be executed.

The transmission bit string is used for modulation of the carrier wave at the modulating-demodulating unit 13. The modulated carrier wave is transmitted to the mobile terminal 2, as the initial packet, through the transmitting unit 14 and the antenna 15.

In the mobile terminal 2, the initial packet is received by the antenna 21 and the receiving unit 22 and demodulated by the modulating-demodulating unit 23 to obtain the reception bit string made multivalued by A/D(Analog Digital Converter). The reception bit string is decoded by the decoding unit 24 shown in FIG. 3.

In the decoding unit 24, the reception bit string is divided, by the depuncturing/serial-parallel converting unit 30, into the systematic bit string and the parity bit string, which are input to the FB decoder 31 shown in FIG. 4.

The decoding unit 24 completes the decoding of the previously received packet and transmits the decoding result to the input-output unit 25. The control unit 28 therefore determines that the decoded packet is the initial packet and controls the decoding unit 24 on the basis of this determination.

The control signal supplied from the control unit 28 to the decoding unit 24 is input to the FB decoder 31 such that the switches 45 and 46 are set in an opened state. Thus, the systematic bit string and the parity bit string are input to the soft-input soft-output decoder 42 and nothing is added to the systematic bit string or the parity bit string at the adders 40 and 41. Moreover, the parity bit string is output and stored in the memory 44.

On the basis of the parity bit string which is output from the adder 41, the soft-input soft-output decoder 42 error- corrects the systematic bit string which is output from the adder 40 and decodes the error-corrected systematic bit string. The decoding result is output to the hard decision unit 32, and is also output and stored in the memory 43.

The hard decision unit 32 executes the hard decision of the decoding result. The CRC decoder 33 executes the CRC decoding of the hard decision result and determines presence or absence of an error.

If the CRC decoder 33 determines absence of an error, the CRC decoder 33 notifies the determination result to the control unit 28. The control unit 28 controls the decoding unit 24 such that the decoding unit 24 outputs the decoded bit string to the input-output unit 25.

Furthermore, the control unit 28 instructs the encoding unit 26 to transmit an ACK signal to the base station 1. In accordance with this instruction, the encoding unit 26 generates an ACK signal and encodes both the ACK signal and other information to be transmitted in a predetermined format. The encoded signal and information are transmitted to the base station 1 through the modulating-demodulating unit 23, the transmitting unit 27 and the antenna 21.

On the other hand, if the CRC decoder 33 determines presence of an error, the CRC decoder 33 notifies the determination result to the control unit 28. The control unit 28 controls the decoding unit 24 not to output the decoded bit string to the input-output unit 25.

The control unit 28 also instructs the encoding unit 26 to transmit a NACK signal to the base station 1. In accordance with this instruction, the encoding unit 26 generates a NACK signal and encodes both the NACK signal and other information to be transmitted in a predetermined format. The encoded signal and information are transmitted to the base station 1 through the modulating-demodulating unit 23, the transmitting unit 27 and the antenna 21.

In response to the operations of the mobile terminal 2, the signal transmitted from the mobile terminal 2 is received by the line network interface 11 of the base station 1 through the antenna 15, the receiving unit 16, the modulating-demodulating unit 13, and the decoding unit 17.

If the information decoded by the decoding unit 17 includes the ACK signal, the line network interface 11 determines that the previously transmitted packet has been certainly received by the mobile terminal 2 and prepares for next transmission of a following initial packet.

On the other hand, if the information decoded by the decoding unit 17 includes the NACK signal, the line network interface 11 determines that the retransmitted packet needs to be transmitted and operates transmission of the retransmitted packet.

In response to this, the mobile terminal 2 receives and demodulates the retransmitted packet transmitted from the base station 1, similarly to the initial packet. Thus, the reception bit string made multivalued by A/D is obtained. The reception bit string is decoded by the decoding unit 24 shown in FIG. 3.

In the decoding unit 24, the reception bit string is divided, by the depuncturing/serial-parallel converting unit 30, into the systematic bit string and the parity bit string, which are input to the FB decoder 31 shown in FIG. 4. As the control unit 28 determines that the currently received packet is the retransmitted packet, the control unit 28 controls the decoding unit 24 on the basis of this determination.

The control signal supplied from the control unit 28 to the decoding unit 24 is input to the FB decoder 31 such that the switches 45 and 46 are set in a shorted state. Thus, the systematic bit string and the parity bit string which are output from the depuncturing/serial-parallel converting unit 30 are added to the bit string stored in the memory 43 and the bit string stored in the memory 44 by the adders 40 and 41, respectively, by unit of bit, and are subjected to chase combining. The read control of the memories 43 and 44 are executed by the control unit 28.

The systematic bit string and the parity bit string obtained from the chase combining are input to the soft-input soft-output decoder 42. Moreover, the parity bit string is output and stored in the memory 44.

On the basis of the parity bit string, the soft-input soft-output decoder 42 error-corrects the systematic bit string and decodes the error-corrected systematic bit string. The decoding result is output to the hard decision unit 32, and is also output and stored in the memory 43.

The hard decision unit 32 executes the hard decision of the decoding result. The CRC decoder 33 executes the CRC decoding of the hard decision result and determines presence or absence of an error.

If the CRC decoder 33 determines absence of an error, the CRC decoder 33 notifies the determination result to the control unit 28 and the ACK signal is transmitted to the base station 1. On the other hand, if the CRC decoder 33 determines presence of an error, the CRC decoder 33 notifies the determination result to the control unit 28, the NACK signal is transmitted to the base station 1, and the above-described processing is repeated.

If the receive data includes an error as described above, in the mobile terminal 2 used in the W-CDMA system, the error-corrected systematic bit which is received before retransmitted, and the systematic bit received by the retransmission, are subjected to chase combining by unit of bit to obtained the receive data.

According to the mobile terminal 2 having the above-described configuration, the previously received data subjected to chase combining is error-corrected. Thus, the error-correcting ability is more increased than that in a conventional case where the receive data is subjected to chase combining and is not error-corrected. For this reason, the effect of the improved SIR can be obtained and the increase in the retransmission frequency can be restricted.

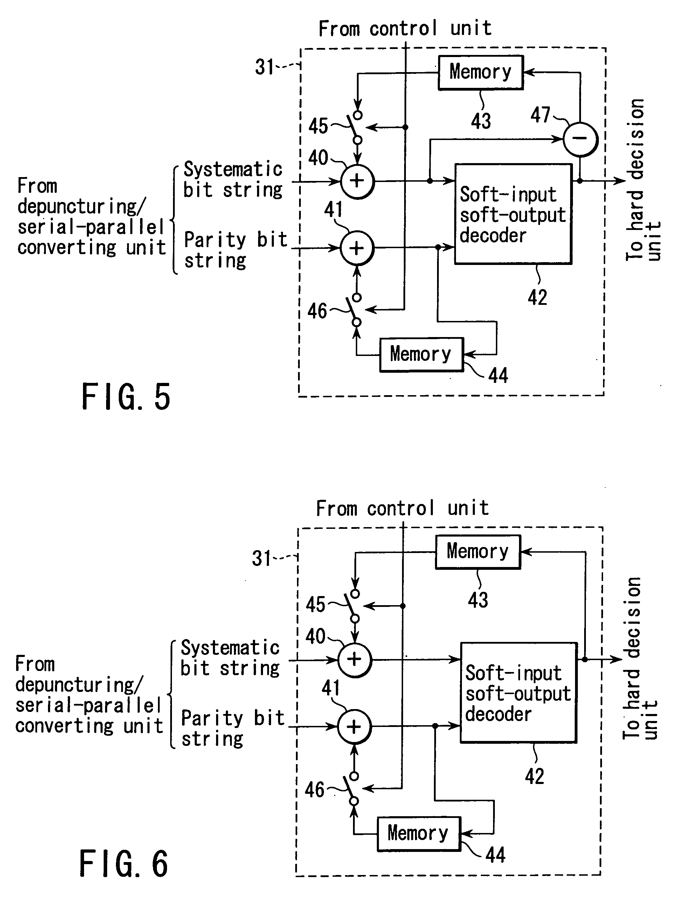

The present invention is not limited to the above-described embodiment. For example, the embodiment employs the FB decoder 31 having the configuration shown in FIG. 4. Instead, the FB decoder 31 may have configurations shown in FIGS. 5 to 9.

In the FB decoder 31 shown in FIG. 5, a difference between the output of the adder 40 and the output of the soft-input soft-output decoder 42 is obtained by a subtractor 47 and the difference is stored in the memory 43. In other words, the bit string corresponding to the difference between the systematic bit string decoded by the soft-input soft-output decoder 42 and the pre-decoded systematic bit string is store in the memory 43.

The switches 45 and 46 are opened when the initial packet is received, or are shorted when the retransmitted packet is received, similarly to the switches shown in FIG. 4. Thus, the bit strings stored in the memories 43 and 44 are subjected to chase combining.

In the FB decoder 31 shown in FIG. 6, the output of the soft-input soft-output decoder 42 is stored in the memory 44. In other words, the error-corrected parity bit string is stored in the memory 44.

The switches 45 and 46 are opened when the initial packet is received, or are shorted when the retransmitted packet is received, similarly to the switches shown in FIG. 4. Thus, the bit strings stored in the memories 43 and 44 are subjected to chase combining.

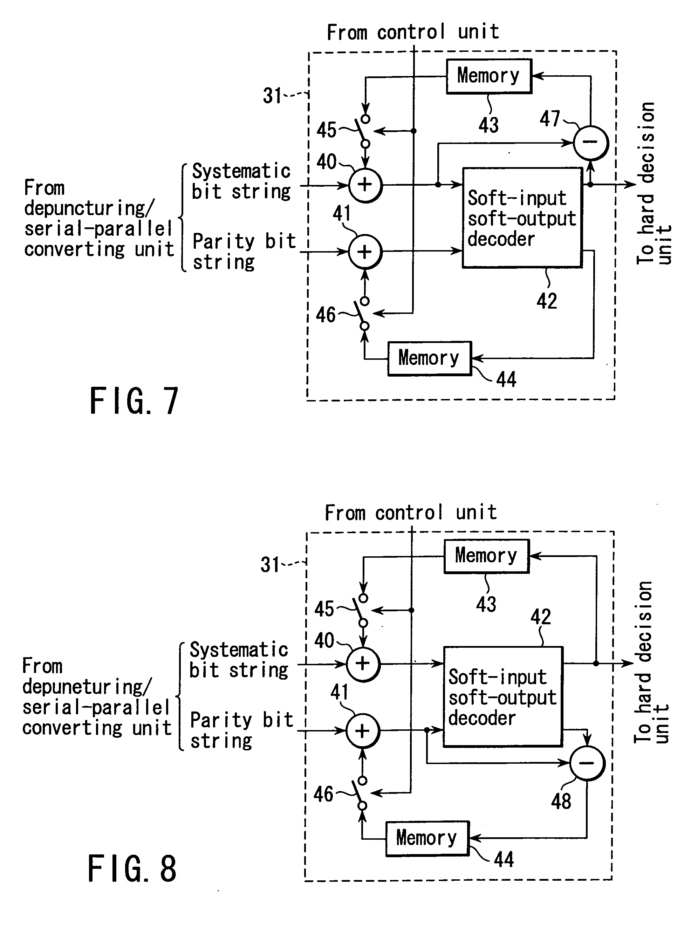

In the FB decoder 31 shown in FIG. 7, a difference between the output of the adder 40 and the output of the soft-input soft-output decoder 42 is obtained by the subtractor 47 and the difference is stored in the memory 43. In other words, the bit string corresponding to the difference between the systematic bit string error-corrected by the soft-input soft-output decoder 42 and the pre-error-corrected systematic bit string is stored in the memory 43.

In addition, the output of the soft-input soft-output decoder 42 is stored in the memory 44. In other words, the error-corrected party bit string is stored in the memory 44.

The switches 45 and 46 are opened when the initial packet is received, or are shorted when the retransmitted packet is received, similarly to the switches shown in FIG. 4. Thus, the bit strings stored in the memories 43 and 44 are subjected to chase combining.

In the FB decoder 31 shown in FIG. 8, a difference between the output of the adder 41 and the output of the parity bit string error-corrected by the soft-input soft-output decoder 42 is obtained by a subtractor 48 and the difference is stored in the memory 44. In other words, the bit string corresponding to the difference between the parity bit string error-corrected by the soft-input soft-output decoder 42 and the pre-error-corrected parity bit string is stored in the memory 44.

The switches 45 and 46 are opened when the initial packet is received, or are shorted when the retransmitted packet is received, similarly to the switches shown in FIG. 4. Thus, the bit strings stored in the memories 43 and 44 are subjected to chase combining.

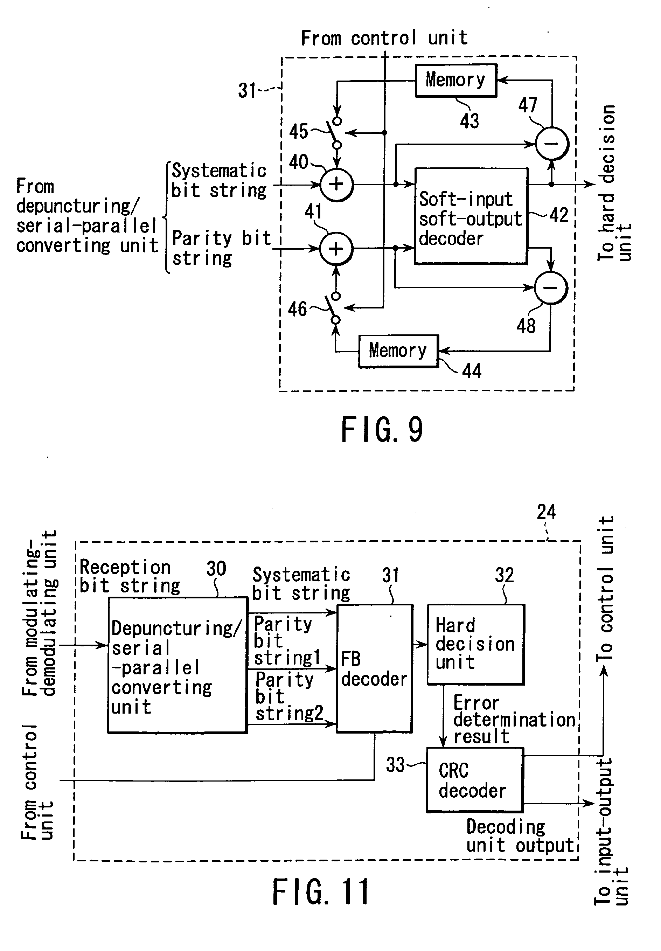

In the FB decoder 31 shown in FIG. 9, a difference between the output of the adder 40 and the output of the soft-input soft-output decoder 42 is obtained by the subtractor 47 and the difference is stored in the memory 43. In other words, the bit string corresponding to the difference between the systematic bit string error-corrected by the soft-input soft-output decoder 42 and the pre-decoded systematic bit string is stored in the memory 43.

In addition, a difference between the output of the adder 41 and the output of the soft-input soft-output decoder 42 is obtained by the subtractor 48 and the difference is stored in the memory 44. In other words, the bit string corresponding to the difference between the parity bit string error-corrected by the soft-input soft-output decoder 42 and the pre-decoded parity bit string is stored in the memory 44.

The switches 45 and 46 are opened when the initial packet is received, or are shorted when the retransmitted packet is received, similarly to the switches shown in FIG. 4. Thus, the bit strings stored in the memories 43 and 44 are subjected to chase combining.

In the FB decoder 31, the levels of the bit strings to be input to the adder 41 or 42 may be corrected before the bit strings are added thereto. For this reason, a level corrector 51, a level corrector 52 and a level corrector 53 may be provided between the depuncturing/serial-parallel converting unit 30 and the input terminals of the adders 41, 42, between the output terminal of the memory 43 and the input terminal of the adder 40, and between the output terminal of the memory 44 and the input terminal of the adder 41, respectively.

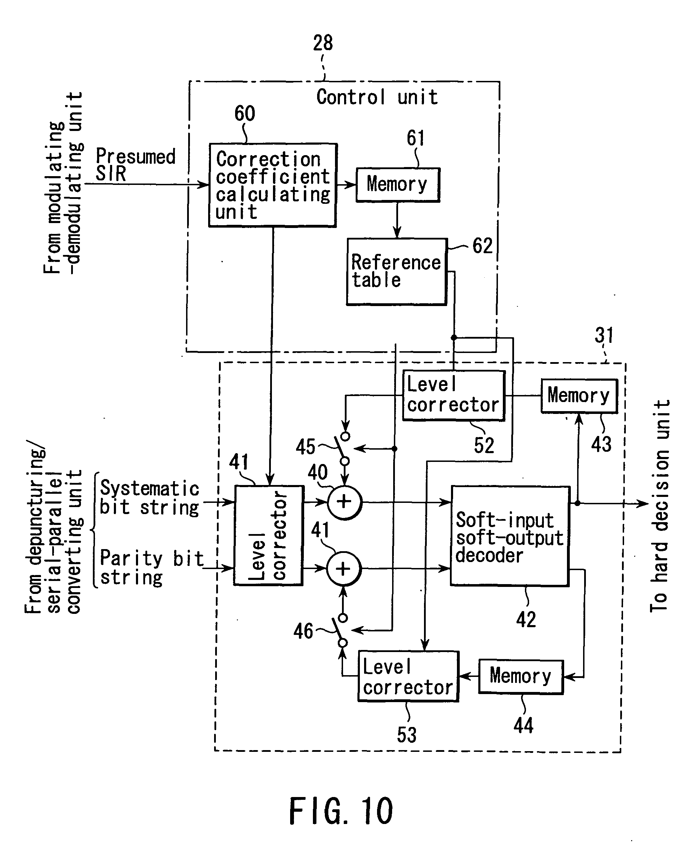

Application of this configuration to the FB decoder 31 shown in FIG. 4 is illustrated in FIG. 10. In accordance with addition of the level correctors 51, 52 and 53, the control unit 28 has a level correction controlling function to control the level correctors. To implement this function, the control unit 28 further comprises a correction coefficient calculating unit 60, a memory 61 and a reference table 62.

Next, operations of the FB decoder 31 having the configuration shown in FIG. 10 will be explained.

The modulating-demodulating unit 23 resumes the SIR (signal-to-interference ratio) of a pilot symbol included in the packet which is received from the base station 1. The presumed SIR value is output to the correction coefficient calculating unit 60.

On the basis of the presumed SIR value, the calculating unit 60 calculates a level correction coefficient for the bit string which is obtained from the packet corresponding to the presumed SIR value, and outputs the level correction coefficient to the level corrector 51. The level correction coefficient is set at a value which can minimize a level difference of bit string between different packets.

The level corrector 51 corrects the levels of the systematic bit string and the parity bit string which are input from the depuncturing/serial-parallel converting unit 30, on the basis of the level correction coefficient. Thus, even if the SIR value of the initial packet and the retransmitted packet is changed, a level difference between the initial packet and the retransmitted packet can be corrected, and the initial packet and the retransmitted packet can be subjected to chase combining by the adders 40 and 41, respectively, at an appropriate level.

The level correction coefficient calculated by the calculating unit 60 is temporarily stored in the memory 61. When the retransmitted packet is received after receiving the packet corresponding to the level correction coefficient, the level correction coefficient is read from the memory 61 and stored in the reference table 62.

After that, when the bit string based on the retransmitted packet is input to the FB decoder 31, the level correction coefficient stored in the reference table 62 is output to the level correctors 52 and 53. The levels of the bit strings which are output from the memories 43 and 44 are corrected by the level correctors 52 and 53, respectively, on the basis of the level correction coefficient stored in the reference table 62.

In other words, the bit strings stored in the memories 43 and 44 can be subjected to chase combining at the adders 40 and 41 after corrected at the level at which a gain effect of the soft-input soft-output decoder 42 is considered.

For this reason, as the FB decoder 31 has the level correcting function and can appropriately correct the level by considering the variation of the SIR and the gain of the soft-input soft-output decoder 42, accuracy in error correction can be enhanced.

Addition of the level correcting function to the FB decoder 31 of FIG. 4 has been explained above. However, The function can also be added to the FB decoder 31 shown in any of FIGS. 5 to 9.

In the FB decoder 31 having any of the configurations shown in the figures, the level corrector 51, the level corrector 52 and the level corrector 53 may be provided between the depuncturing/serial-parallel converting unit 30 and the input terminals of the adders 41, 42, between the output terminal of the memory 43 and the input terminal of the adder 40, and between the output terminal of the memory 44 and the input terminal of the adder 41, respectively. Like or similar advantages can be obtained in any of the cases.

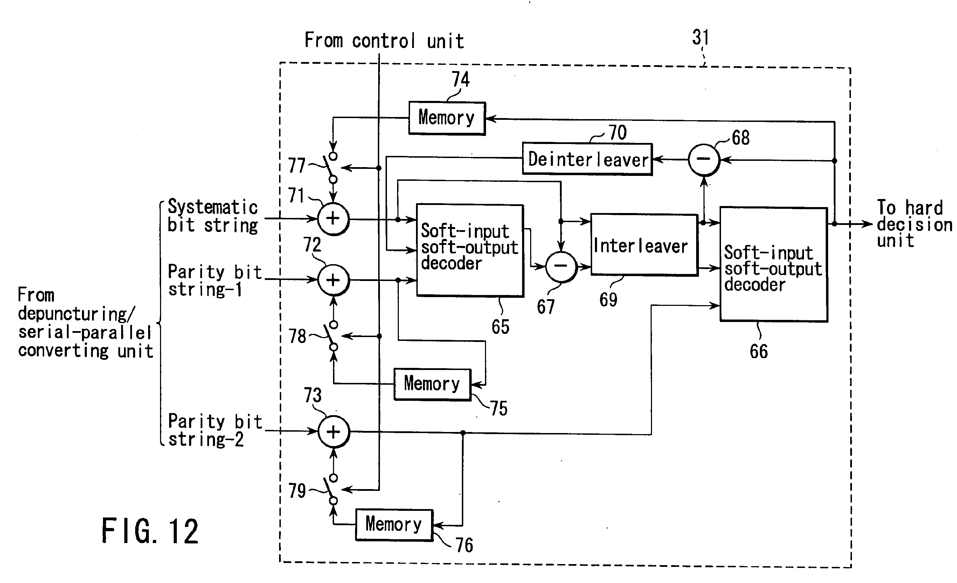

Moreover, if the convolutional encoder 122 of the base station 1 is a turbo encoder, the depuncturing/serial-parallel converting unit 30 of the mobile terminal 2 may be configured to separate the systematic bit string from parity bit strings of two channels as shown in FIG. 11.

Thus, execution of the turbo decoding can be implemented by using the turbo code in the FB decoder 31 of FIGS. 4 to 9, as shown in FIGS. 12 to 15.

Next, configurations of the FB decoder 31 using the turbo code will be explained with reference to FIGS. 12 to 15.

In FIG. 12, the FB decoder 31 of FIG. 4 is improved to correspond to a turbo code.

The error-corrected systematic bit string is obtained by soft-input soft-output decoders 65, 66, subtractors 67, 68, an interleaver 69 and a deinterleaver 70 and is stored in a memory 74. The systematic bit string stored in the memory 74 is subjected to chase combining with a systematic bit string based on the retransmitted packet, in an adder 71.

A parity bit string-1 which is output from an adder 72 is stored in a memory 75. The parity bit string-1 stored in the memory 75 is subjected to chase combining with a parity bit string-1 based on the retransmitted packet, in the adder 72.

Similarly, a parity bit string-2 which is output from an adder 73 is stored in a memory 76. The parity bit string-2 stored in the memory 76 is subjected to chase combining with a parity bit string-2 based on the retransmitted packet, in the adder 73.

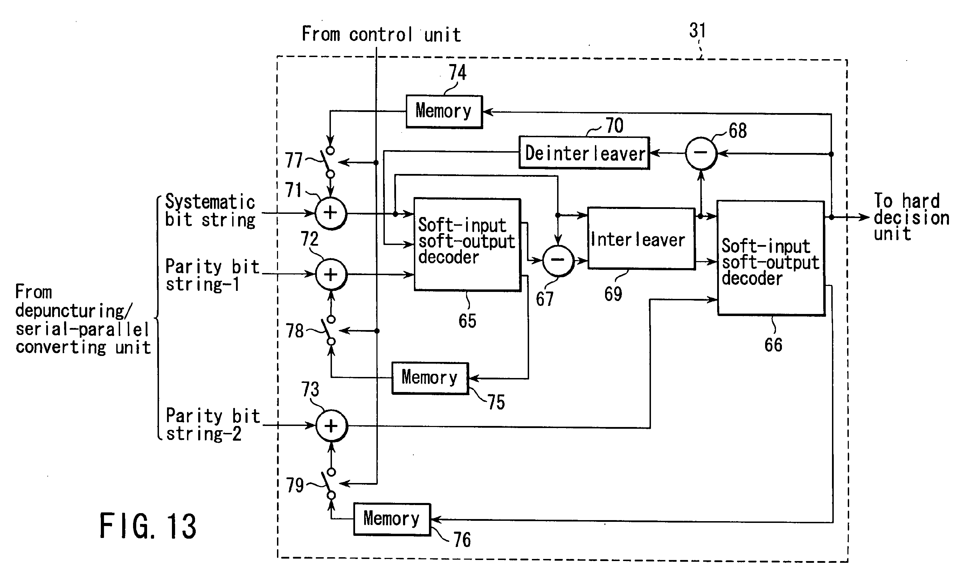

In FIG. 13, the FB decoder 31 of FIG. 6 is improved to correspond to a turbo code.

The error-corrected systematic bit string is obtained by the soft-input soft-output decoders 65, 66, the subtractors 67, 68, the interleaver 69 and the deinterleaver 70 and is stored in the memory 74. The systematic bit string stored in the memory 74 is subjected to chase combining with a systematic bit string based on the retransmitted packet, in the adder 71.

The parity bit string-1 error-corrected by the soft-input soft-output decoder 65 is stored in the memory 75. The parity bit string-1 stored in the memory 75 is subjected to chase combining with a parity bit string-1 based on the retransmitted packet, in the adder 72.

Similarly, the parity bit string-2 error-corrected by the soft-input soft-output decoder 66 is stored in the memory 76. The parity bit string-2 stored in the memory 76 is subjected to chase combining with a parity bit string-2 based on the retransmitted packet, in the adder 73.

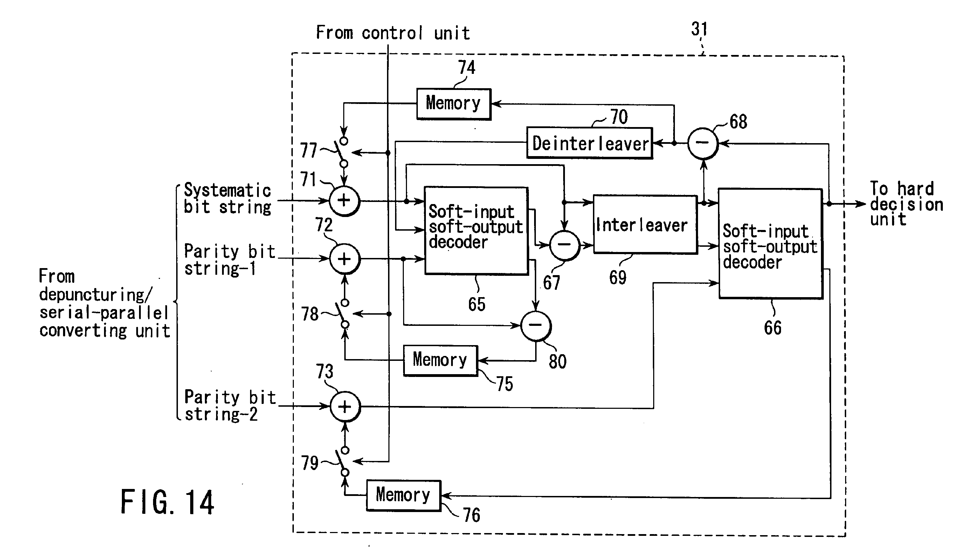

In FIG. 14, the FB decoder 31 of FIG. 7 is improved to correspond to a turbo code.

The error-corrected systematic bit string is obtained by the soft-input soft-output decoders 65, 66, the subtractors 67, 68, the interleaver 69 and the deinterleaver 70. A difference between the error-corrected systematic bit string and the pre-error-corrected systematic bit string is obtained by the subtractor 68 and stored in the memory 74. The systematic bit string stored in the memory 74 is subjected to chase combining with a systematic bit string based on the retransmitted packet, in the adder 71.

The parity bit string-1 error-corrected by the soft-input soft-output decoder 65 is obtained. A difference between the error-corrected parity bit string-1 and the pre-error-corrected parity bit string-1 is obtained by a subtractor 80 and stored in the memory 75. The parity bit string-1 stored in the memory 75 is subjected to chase combining with a parity bit string-1 based on the retransmitted packet, in the adder 72.

The parity bit string-2 error-corrected by the soft-input soft-output decoder 66 is stored in the memory 76. The parity bit string-2 stored in the memory 76 is subjected to chase combining with a parity bit string-2 based on the retransmitted packet, in the adder 73.

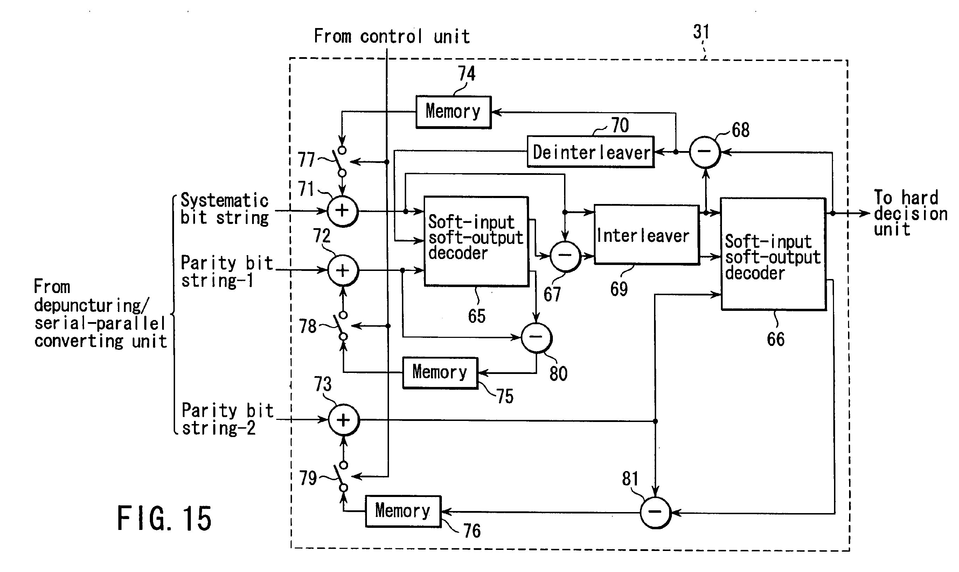

In FIG. 15, the FB decoder 31 of FIG. 9 is improved to correspond to a turbo code.

The error-corrected systematic bit string is obtained by the soft-input soft-output decoders 65, 66, the subtractors 67, 68, the interleaver 69 and the deinterleaver 70. A difference between the error-corrected systematic bit string and the pre-error-corrected systematic bit string is obtained by the subtractor 68 and stored in the memory 74. The systematic bit string stored in the memory 74 is subjected to chase combining with a systematic bit string based on the retransmitted packet, in the adder 71.

The parity bit string-1 error-corrected by the soft-input soft-output decoder 65 is obtained. A difference between the error-corrected parity bit string-1 and the pre-error-corrected parity bit string-1 is obtained by a subtractor 80 and stored in the memory 75. The parity bit string-1 stored in the memory 75 is subjected to chase combining with a parity bit string-1 based on the retransmitted packet, in the adder 72.

Similarly, the parity bit string-2 error-corrected by the soft-input soft-output decoder 66 is obtained. A difference between the error-corrected parity bit string-2 and the pre-error-corrected parity bit string-2 is obtained by a subtractor 81 and stored in the memory 76. The parity bit string-2 stored in the memory 76 is subjected to chase combining with a parity bit string-2 based on the retransmitted packet, in the adder 73.

In the configurations shown in FIGS. 12 to 15, a greater error-correcting ability can be achieved by using the turbo code by using the turbo code.

In any of the configurations, the accuracy in error correction can be enhanced by adding the configuration for level correction as shown in FIG. 10.

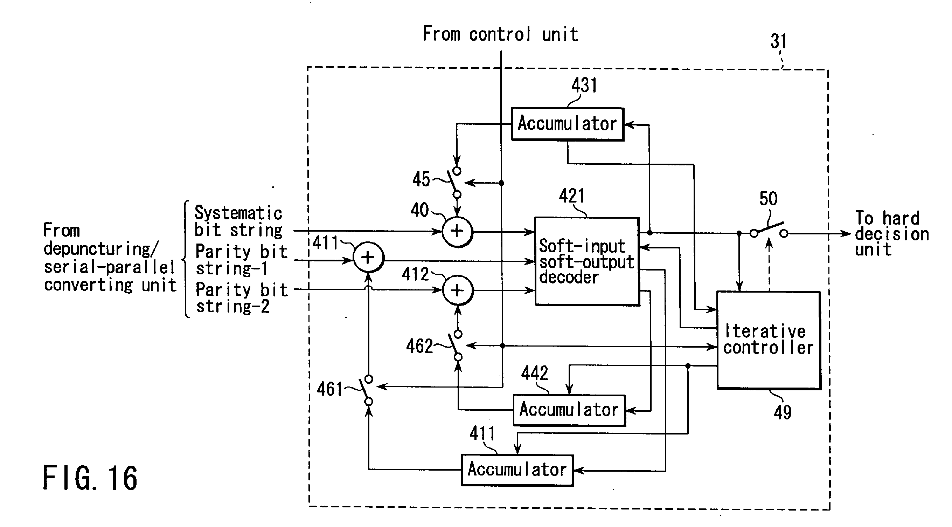

In addition, a turbo decoder may be incorporated into the FB decoder 31 as shown in FIG. 16. In this kind of FB decoder 31, a turbo decoder 421 is controlled by an iterative controller 49 to repeat turbo decoding. In this configuration, accumulators 431, 441 and 442 for accumulating the bit strings are employed instead of the memory storing one bit string.

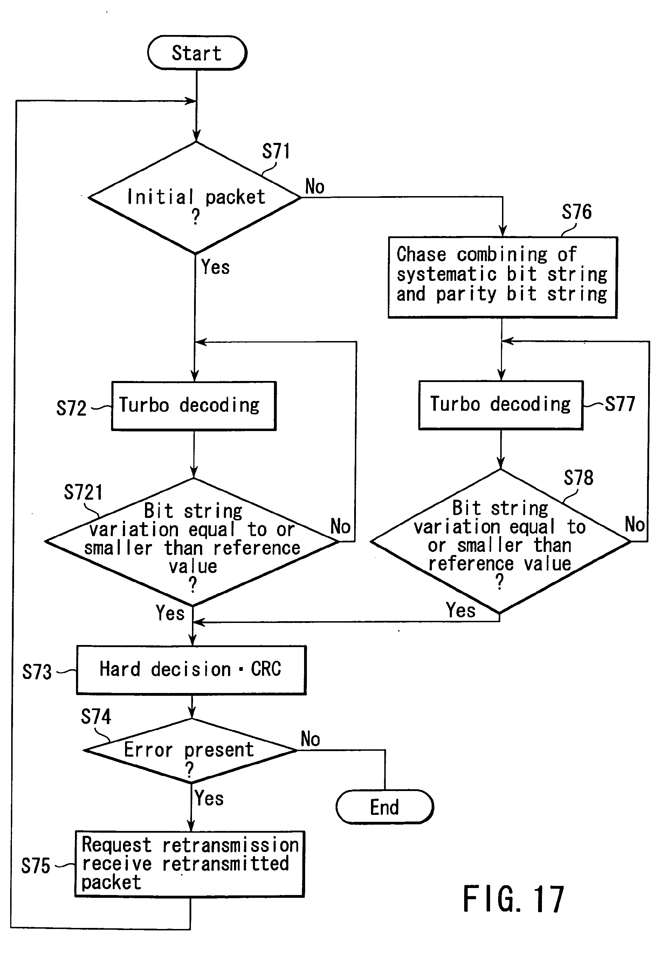

Operations of the FB decoder 31 shown in FIG. 16 will be explained with reference to a flowchart of FIG. 17.

First, in step S71, the controller 28 determines whether the received packet is the initial packet or the retransmitted packet. If the received packet is the initial packet, the operation proceeds to step S72. If the received packet is the retransmitted packet, the operation proceeds to step S76.

In step S72, the control unit 28 controls switches 45, 461 and 462 to be in an opened state. A switch 50 is also controlled to be in an opened state by the iterative controller 49.

The systematic bit string, parity bit string-1 and parity bit string-2 from the initial packet by the depuncturing/serial-parallel converting unit 30 are output to the turbo decoder 421.

The turbo decoder 421 decodes the systematic bit string of the initial packet by the turbo decoding. The decoding result is accumulated in the accumulator 431 controlled by the iterative controller 49, and is also output to the iterative controller 49.

The parity bit string-1 error-corrected by the turbo decoder 421 is accumulated in the accumulator 441 controlled by the iterative controller 49. The parity bit string-2 error-corrected by the turbo decoder 421 is also accumulated in the accumulator 442 controlled by the iterative controller 49.

In step S72, the iterative controller 49 compares bits of the systematic bit string currently decoded by the turbo decoder 421 with bits of the previously decoded systematic bit string, respectively. If the systematic bit string is obtained for the first time, the operation unconditionally returns to step S72 to execute the turbo decoding again.

If the comparison result indicates that a positively or negatively varied bit number is equal to or smaller than a reference value, it is considered that the error-correcting ability is converged by the turbo decoding. The operation proceeds to step S73.

If the comparison result indicates that a positively or negatively varied bit number is greater than a reference value, it is considered that the error correction can be further executed by the turbo decoding. The operation returns to step S72. In this step, the iterative controller 49 controls the turbo decoder 421 to execute the turbo decoding.

In step S73, the iterative controller 49 makes the switch 50 shorted and outputs the systematic bit string decoded by the turbo decoder 421 to the hard decision unit 32.

The hard decision unit 32 executes the hard decision about the systematic bit string and outputs the decision result to the CRC decoder 33. The CRC decoder 33 executes the CRC decoding about the hard decision result and determines presence or absence of an error. The operation proceeds to step S74.

In step S74, the control unit 28 determines whether the CRC decoder 33 decodes an error. If the CRC decoder 33 decodes no error, this processing is ended and the FB decoder 31 is prepared for next reception of the initial packet. If the CRC decoder 33 decodes an error, the operation proceeds to step S75.

In step S75, the control unit 28 controls the transmission system to request the retransmitted packet to the base station 1. If the control unit 28 receives the retransmitted packet, the operation returns to step S71.

In step S76, the control unit 28 makes the switches 45, 461 and 462 shorted, and makes the switch 50 opened by the iterative controller 49.

The systematic bit string obtained from the retransmitted packet by the depuncturing/serial-parallel converting unit 30 is subjected to chase combining with the systematic bit string accumulated by the accumulator 431, in the adder 40, and is output to the turbo decoder 421.

The parity bit string-1 obtained from the retransmitted packet by the depuncturing/serial-parallel converting unit 30 is subjected to chase combining with the parity bit string-1 accumulated by the accumulator 441, in the adder 411, and is output to the turbo decoder 421.

Similarly, the parity bit string-2 obtained from the retransmitted packet by the depuncturing/serial-parallel converting unit 30 is subjected to chase combining with the parity bit string-2 accumulated by the accumulator 442, in the adder 412, and is output to the turbo decoder 421.

In step S77, the turbo decoder 421 decodes the systematic bit string subjected to chase combing in the adder 40. The decoding result is accumulated in the accumulator 431 controlled by the iterative controller 49 and is output to the iterative controller 49.

The parity bit string-1 subjected to chase combining by the adder 411 is error-corrected by the turbo decoder 421 and accumulated in the accumulator 441 controlled by the iterative controller 49.

Similarly, the parity bit string-2 subjected to chase combining by the adder 412 is error-corrected by the turbo decoder 421 and accumulated in the accumulator 442 controlled by the iterative controller 49.

In step S78, the iterative controller 49 compares bits of the systematic bit string currently decoded by the turbo decoder 421 with bits of the previously decoded systematic bit string, respectively. If the comparison result indicates that a positively or negatively varied bit number is equal to or smaller than the reference value, it is considered that the error-correcting ability is converged by the turbo decoding. The operation proceeds to step S73.

If the comparison result indicates that a positively or negatively varied bit number is greater than the reference value, it is considered that the error correction can be further executed by the turbo decoding. The operation returns to step S77. In this step, the iterative controller 49 controls the turbo decoder 421 to execute the turbo decoding.

In the FB decoder 31 having the above-described configuration, the turbo decoding and the accumulation of the bit string in the accumulators 431, 441 and 442 are repeated until the error in the result of the turbo decoding executed by the turbo decoder 421 is converged. Thus, the error-correction effect can be enhanced.

In the above-described configuration, the bit string decoded by the turbo decoder 421 has been accumulated. However, a difference between the pre-decoded bit string and the decoded bit string may be obtained and accumulated.

If the variation or dispersion of the accumulated bit string is equal to or smaller than a threshold value, the iterative controller 49 may terminate the turbo decoding by determining that the error has been converged.

The application of incorporating the turbo decoder into the FB decoder 31 of FIG. 6 has been described above. However, the turbo decoder can also be incorporated into the configurations of FIGS. 4, 5, 7, 8 and 9.

In any of the incorporations, the accuracy in the error correction can be enhanced by adding the configuration for level correction as shown in FIG. 10.

In the above-described embodiment, puncturing and transmitting the initial packet and the retransmitted packet at the same pattern has been explained.

However, the initial packet and the retransmitted packet can also be punctured and transmitted at different patterns.

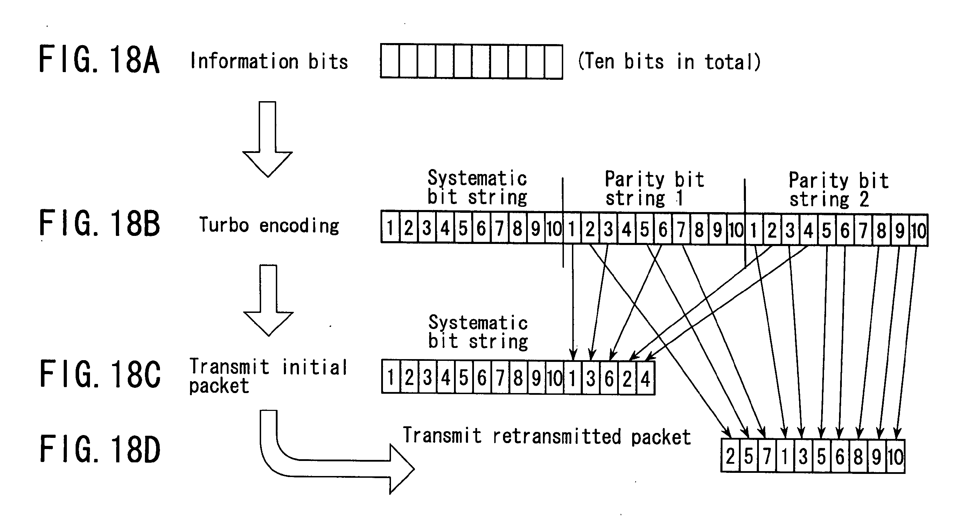

Next, transmission of the information bits composed of ten bits in total will be explained. In the base station 1, information bits shown in FIG. 18A is turbo-encoded by the convolutional encoder 122 of the encoding unit 12. The systematic bit string, parity bit string-1 and parity bit string-2 are thereby obtained as shown in FIG. 18B.

The initial packet shown in FIG. 18C is formed by the puncturing unit 123. In other words, the total bits of the systematic bit string, three bits of the parity bit string-1 and two bits of the parity bit string-2 are extracted to form the initial packet.

After that, the retransmitted packet shown in FIG. 18D is formed by the puncturing unit 123. In other words, the remaining bits of the parity bit string-1 and the parity bit string-2 are extracted to form the retransmitted packet.

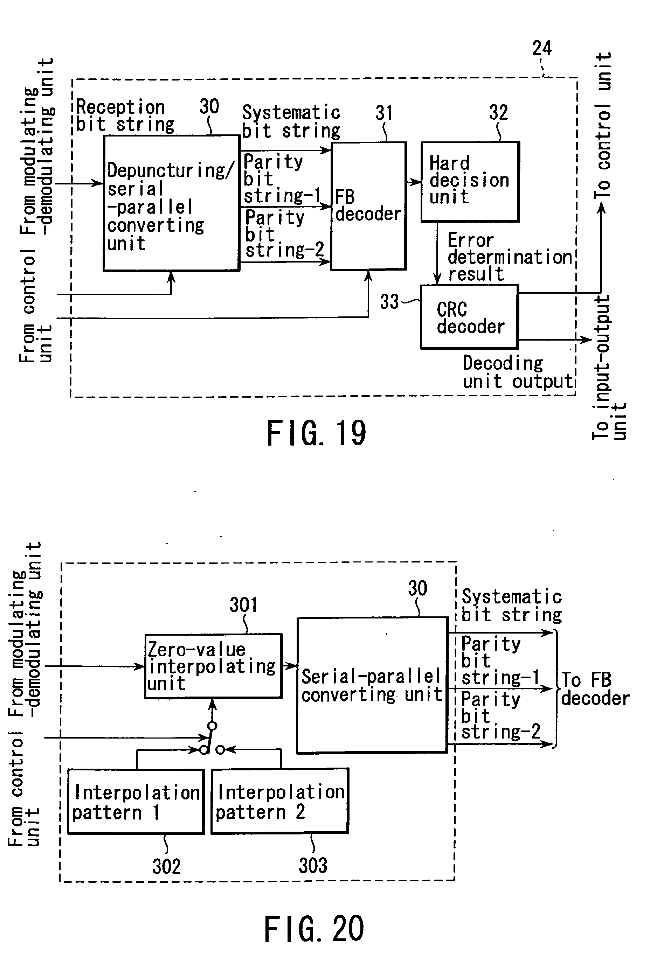

When the transmission from the base station 1 is executed in this manner, the decoding unit 24 is formed as shown in FIG. 19. The configuration of the decoding unit 24 is similar to the configuration of FIG. 11, but is different in view of using a depuncturing/serial-parallel converting unit 30a instead of the depuncturing/serial-parallel converting unit 30.

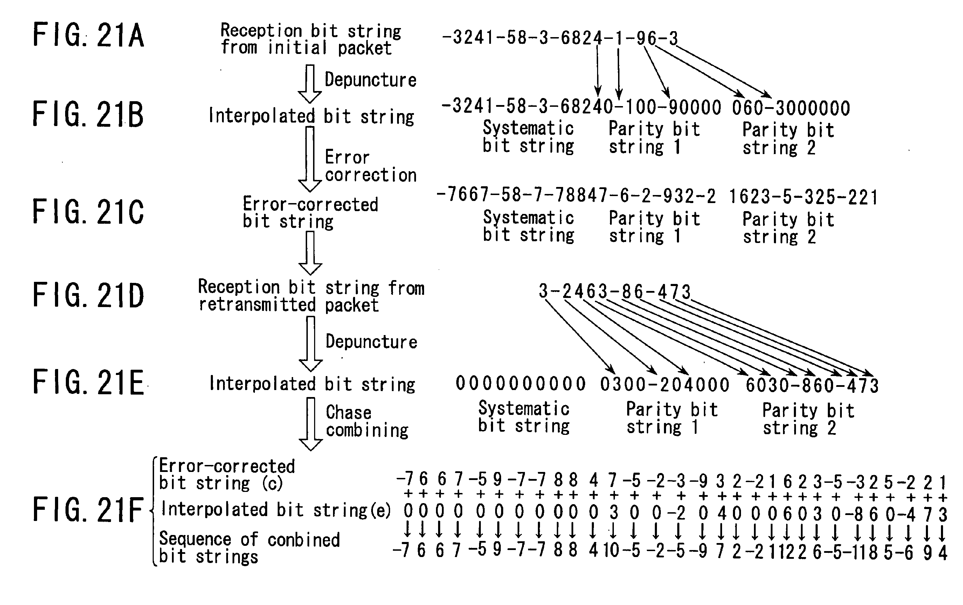

FIG. 20 shows a configuration of the depuncturing/serial-parallel converting unit 30a. The depuncturing/serial-parallel converting unit 30a comprises a zero-value interpolating unit 301, interpolation pattern registers 302 and 303, a switch 304 and a serial-parallel converting unit 305. FIG. 21 illustrates a process of the processing in the mobile terminal 2.

When the mobile terminal 2 receives the initial packet, the initial packet is demodulated by the modulating-demodulating unit 23 to obtain a soft decision value sequence shown in FIG. 21A. This soft decision value sequence is input to the depuncturing/serial-parallel converting unit 30a.

The switch 304 is controlled by the control unit 28 to input an interpolation pattern 1 from the interpolation pattern register 302 to the interpolating unit 301. The interpolation pattern 1 is used to interpolate non-transmitted bits of the initial packet with zero. A bit sequence shown in FIG. 21B is thereby generated.

The bit sequence of FIG. 21B is subjected to serial-parallel conversion by the serial-parallel converting unit 305. The bit sequence is thereby divided into the systematic bit string, parity bit string-1 and parity bit string-2, which are output to the FB decoder 31.

The systematic bit string, parity bit string-1 and parity bit string-2 are error-corrected by the decoding of the FB decoder 31 and become the bit strings shown in FIG. 21C.

The bit strings are subjected to the hard decision by the hard decision unit 32 and the CRC decoding by the CRC decoder 33. If the result of the hard decision and CRC decoding indicates that "an error is present", the mobile terminal 2 requests the base station 1 to transmit the retransmitted packet.

The retransmitted packet transmitted by the base station 1 in response to this request corresponds to the bit string shown in FIG. 18D. For this reason, the hard decision value sequence obtained by the modulating-demodulating unit 23 corresponds to, for example, the bit string shown in FIG. 21D. This bit string is input to the depuncturing/serial-parallel converting unit 30a.

On the other hand, the control unit 28 controls the switch 304 to input an interpolation pattern 2 from the interpolation pattern register 303 to the interpolating unit 301. The interpolation pattern 2 is used to interpolate non-transmitted bits of the retransmitted packet with zero. A bit sequence shown in FIG. 21E is thereby generated.

In the FB decoder 31, the bit string shown in FIG. 21C and the bit string shown in FIG. 21E are subjected to chase combining as shown in FIG. 21F. For example, the chase combining can be accomplished in the configuration shown in FIG. 14.

In this configuration, the error-corrected bit string and the interpolated bit string are subjected to chase combining even if the initial packet and the retransmitted packet are punctured and transmitted at different patterns. The effect of error correction can be therefore enhanced.

In the above-described embodiment, the chase combining is executed in the configuration as shown in FIG. 14, but can be executed in the configuration of FIG. 13.

Moreover, application of the embodiment of the present invention to the radio communications is explained. However, the present invention can also be applied to wired communications.

## Claims

1. A communication apparatus capable of receiving data transmitted by an apparatus of a communication partner, **characterized by** comprising:
receiving means (22) for receiving the data;
error-correcting means (42) for error-correcting the data received by the receiving means (22);
storing means (43) for storing the data error-corrected by the error-correcting means (42);
determining means (33) for determining whether the data error-corrected by the error-correcting means (42) includes an error;
requesting means (28) for requesting the apparatus of the communication partner to retransmit the data if the determining means (33) determines that the data includes an error; and
controlling means (28) for controlling chase combining of the data received by the receiving means (22) and retransmitted from the apparatus of the communication partner, with the data stored in the storing means (43), and inputting the data obtained by the chase combining to the error-correcting means (42).

2. The communication apparatus according to claim 1, **characterized in that** the data transmitted from the apparatus of the communication partner includes first information and second information including information to correct an error generated in the first information during the transmission;
the error-correcting means (42) error-corrects the first information with reference to the second information;
the storing means (43) stores the first information error-corrected by the error-correcting means (42); and
the controlling means (28) controls chase combining of the first information included in the data retransmitted from the apparatus of the communication partner, and the first information stored in the storing means (43), and inputs the first information obtained by the chase combining to the error-correcting means (42).

3. The communication apparatus according to claim 2, **characterized by** further comprising:
second information storing means (44) for storing the second information; and
second information controlling means (28) for controlling chase combining of the second information included in the data received by the receiving means (22) and retransmitted from the apparatus of the communication partner, with the second information stored in the second information storing means (44), and inputting the second information obtained by the chase combining to the error-correcting means (42),
the communication apparatus being **characterized in that** the error-correcting means (42) error-corrects the first information subjected to the chase combining under control of the controlling means (28), with reference to the second information, if the second information is input under control of the second information controlling means (28).

4. The communication apparatus according to claim 2, **characterized by** further comprising:
second information error-correcting means (42) for error-correcting the second information included in the data received by the receiving means (22);
second information storing means (44) for storing the second information error-corrected by the second information error-correcting means (42); and
second information controlling means (28) for controlling chase combining of the second information included in the data received by the receiving means (22) and retransmitted from the apparatus of the communication partner, with the second information stored in the second information storing means (44), and inputting the second information obtained by the chase combining to the error-correcting means (42),
the communication apparatus being **characterized in that** the error-correcting means (42) error-corrects the first information subjected to the chase combining under control of the controlling means (28), with reference to the second information, if the second information is input under control of the second information controlling means (28).

5. The communication apparatus according to claim 2, **characterized by** further comprising:
second information error-correcting means (42) for error-correcting the second information included in the data received by the receiving means (22);
second information storing means (44) for storing a difference between the second information error-corrected by the second information error-correcting means (42) and the pre-error-corrected second information; and
second information controlling means (28) for controlling chase combining of the second information included in the data received by the receiving means (22) and retransmitted from the apparatus of the communication partner, with the second information stored in the second information storing means (44), and inputting the second information obtained by the chase combining to the error-correcting means (42),
the communication apparatus being **characterized in that** the error-correcting means (42) error-corrects the first information subjected to the chase combining under control of the controlling means (28), with reference to the second information, if the second information is input under control of the second information controlling means (28).

6. The communication apparatus according to claim 2, **characterized by** further comprising detecting means (23) for detecting reception quality of a signal transmitted from the apparatus of the communication partner,
the communication apparatus being **characterized in that** the controlling means (28) controls chase combining of the first information included in'the data retransmitted from the apparatus of the communication partner, and the first information stored in the storing means (43), after a level of each of the first information is adjusted with reference to the reception quality detected by the detecting means (23), and the controlling means (28) inputs the first information obtained by the chase combining to the error-correcting means (42).

7. The communication apparatus according to claims 3, **characterized by** further comprising detecting means (23) for detecting reception quality of a signal transmitted from the apparatus of the communication partner,
the communication apparatus being **characterized in that** the second information controlling means (28) controls chase combining of the second information included in the data received by the receiving means (22) and retransmitted from the apparatus of the communication partner, with the second information stored in the second information storing means (44), after a level of each of the second information is adjusted with reference to the reception quality detected by the detecting means (23), and the second information controlling means (28)inputs the second information obtained by the chase combining to the error-correcting means (42).

8. The communication apparatus according to claim 2, **characterized in that** the data transmitted by the apparatus of the communication partner is turbo-encoded data;
the error-correcting means (42) repeatedly decodes the data received by the receiving means (22), by turbo-decoding;
the communication apparatus further comprises determining means (49) for determining whether variation of the data repeatedly decoded by the error-correcting means (42) is equal to or smaller than a preset threshold value;
the storing means (43) stores the first information included in the data decoded by the error-correcting means (42) if the determining means (49) determines that the variation of the repeatedly decoded data is equal to or smaller than the threshold value; and
the determining means (32) determines whether the first information included in the data decoded by the error-correcting means (42) includes an error if the data determining means (49) determines that the variation of the repeatedly decoded data is equal to or smaller than the threshold value.

9. The communication apparatus according to claim 4, **characterized in that** the data transmitted by the apparatus of the communication partner is turbo-encoded data;
the second information error-correcting means (42) repeatedly decodes the data received by the receiving means (22), by turbo-decoding;
the communication apparatus further comprises data determining means (49) for determining whether variation of the data repeatedly decoded by the second information error-correcting means (42) is equal to or smaller than a preset threshold value; and
the second information storing means (44) stores the second information included in the data decoded by the second information error-correcting means (42) if the data determining means (49) determines that the variation of the repeatedly decoded data is equal to or smaller than the threshold value.

10. The communication apparatus according to claim 1, **characterized in that** the data transmitted from the apparatus of the communication partner includes first information and second information including information to correct an error generated in the first information during the transmission;
the first information and a bit string of a part of the second information are integrally transmitted from the apparatus of the communication partner as a first signal and, if the communication apparatus requests the signal to be retransmitted, a bit string of a remaining part of the second information is transmitted from the apparatus of the communication partner;
the communication apparatus further comprises first interpolating means (301) for interpolating data included in the first signal to form first information and second information, and second interpolating means (301) for interpolating data included in the second signal to form first information and second information;
the error-correcting means (42) error-corrects data formed by the first interpolating means (301);
the storing means (43) stores the first and second information error-corrected by the error-correcting means (42); and
the controlling means (28) controls chase combining of the first and second information formed by the second interpolating means (301), with the first and second information stored in the storing means (43), and inputs the data obtained by the chase combining to the error-correcting means (42).

11. A communication apparatus capable of receiving data transmitted by an apparatus of a communication partner, **characterized by** comprising:
receiving means (22) for receiving the data;
error-correcting means (42) for error-correcting the data received by the receiving means (22);
operating means (47) for executing an operation to obtain a difference between the data error-corrected by the error-correcting means (42) and pre-error-corrected data;
storing means (43) for storing data of the difference obtained by the operating means (47);
determining means (33) for determining whether the data error-corrected by the error-correcting means (42) includes an error;
requesting means (28) for requesting the apparatus of the communication partner to retransmit the data if the determining means (33) determines that the data includes an error; and
controlling means (28) for controlling chase combining of the data received by the receiving means (22) and retransmitted from the apparatus of the communication partner, with the data stored in the storing means (43), and inputting the data obtained by the chase combining to the error-correcting means (42).

12. The communication apparatus according to claim 11, **characterized in that** the data transmitted from the apparatus of the communication partner includes first information and second information including information to correct an error generated in the first information during the transmission;
the error-correcting means (42) error-corrects the first information with reference to the second information;
the operating means (47) executes an operation to obtain a difference between the first information error-corrected by the error-correcting means (42) and the first information included in the pre-error-corrected data;
the storing means (43) stores data of the difference obtained by the operating means (47); and
the controlling means (28) controls chase combining of the first information included in the data retransmitted from the apparatus of the communication partner, with the data stored in the storing means (43), and inputs the first information obtained by the chase combining to the error-correcting means (42).

13. The communication apparatus according to claim 12, **characterized by** further comprising:
second information storing means (44) for storing the second information; and
second information controlling means (28) for controlling chase combining of the second information included in the data received by the receiving means (22) and retransmitted from the apparatus of the communication partner, with the second information stored in the second information storing means (44), and inputting the second information obtained by the chase combining to the error-correcting means (42),
the communication apparatus being **characterized in that** the error-correcting means (42) error-corrects the first information subjected to the chase combining under control of the controlling means (28), with reference to the second information, if the second information is input under control of the second information controlling means (28).

14. The communication apparatus according to claim 12, **characterized by** further comprising:
second information error-correcting means (42) for error-correcting the second information included in the data received by the receiving means (22);
second information storing means (44) for storing the second information error-corrected by the second information error-correcting means (42); and
second information controlling means (28) for controlling chase combining of the second information included in the data received by the receiving means (22) and retransmitted from the apparatus of the communication partner, with the second information stored in the second information storing means (44), and inputting the second information obtained by the chase combining to the error-correcting means (42),
the communication apparatus being **characterized in that** the error-correcting means (42) error-corrects the first information subjected to the chase combining under control of the controlling means (28), with reference to the second information, if the second information is input under control of the second information controlling means (28).

15. The communication apparatus according to claim 12, **characterized by** further comprising:
second information error-correcting means (42) for error-correcting the second information included in the data received by the receiving means (22);
second information storing means (44) for storing a difference between the second information error-corrected by the second information error-correcting means (42) and the pre-error-corrected second information; and
second information controlling means (28) for controlling chase combining of the second information included in the data received by the receiving means (22) and retransmitted from the apparatus of the communication partner, with the second information stored in the second information storing means (44), and inputting the second information obtained by the chase combining to the error-correcting means (42),
the communication apparatus being **characterized in that** the error-correcting means (42) error-corrects the first information subjected to the chase combining under control of the controlling means (28), with reference to the second information, if the second information is input under control of the second information controlling means (28).

16. The communication apparatus according to claim 12, **characterized by** further comprising detecting means (23) for detecting reception quality of a signal transmitted from the apparatus of the communication partner,
the communication apparatus being **characterized in that** the controlling means (28) controls chase combining of the first information included in the data retransmitted from the apparatus of the communication partner, with the data stored in the storing means (43), after a level of each of the first information and the data is adjusted with reference to the reception quality detected by the detecting means (23), and the controlling means (28) inputs the first information obtained by the chase combining to the error-correcting means (42).

17. The communication apparatus according to claims 13, **characterized by** further comprising detecting means (23) for detecting reception quality of a signal transmitted from the apparatus of the communication partner,
the communication apparatus being **characterized in that** the second information controlling means (28) controls chase combining of the second information included in the data received by the receiving means (22) and retransmitted from the apparatus of the communication partner, with the second information stored in the second information storing means (44), after a level of each of the second information is adjusted with reference to the reception quality detected by the detecting means (23), and the second information controlling means (28)inputs the second information obtained by the chase combining to the error-correcting means (42).

18. The communication apparatus according to claim 12, **characterized in that** the data transmitted by the apparatus of the communication partner is turbo-encoded data;
the error-correcting means (42) repeatedly decodes the data received by the receiving means (22), by turbo-decoding;
the communication apparatus further comprises determining means (49) for determining whether variation of the data repeatedly decoded by the error-correcting means (42) is equal to or smaller than a preset threshold value;
the operating means (47) obtains a difference between the first information included in the data decoded by the error-correcting means (42) and the first information included in the pre-error-decoded data if the determining means (49) determines that the variation of the repeatedly decoded data is equal to or greater than the threshold value;
the storing means (43) stores data of the difference obtained by the operating means (47); and
the determining means (32) determines whether the first information included in the data decoded by the error-correcting means (42) includes an error if the data determining means (49) determines that the variation of the repeatedly decoded data is equal to or smaller than the threshold value.

19. The communication apparatus according to claim 14, **characterized in that** the data transmitted by the apparatus of the communication partner is turbo-encoded data;
the second information error-correcting means (42) repeatedly decodes the data received by the receiving means (22), by turbo-decoding;
the communication apparatus further comprises data determining means (49) for determining whether variation of the data repeatedly decoded by the second information error-correcting means (42) is equal to or smaller than a preset threshold value; and
the second information storing means (44) stores the second information included in the data decoded by the second information error-correcting means (42) if the data determining means (49) determines that the variation of the repeatedly decoded data is equal to or smaller than the threshold value.

20. The communication apparatus according to claim 11, **characterized in that** the data transmitted from the apparatus of the communication partner includes first information and second information including information to correct an error generated in the first information during the transmission;
the first information and a bit string of a part of the second information are integrally transmitted from the apparatus of the communication partner as a first signal and, if the communication apparatus requests the signal to be retransmitted, bit strings of remaining parts of the second information are transmitted from the apparatus of the communication partner;
the communication apparatus further comprises first interpolating means (301) for interpolating data included in the first signal to form first information and second information, and second interpolating means (301) for interpolating data included in the second signal to form first information and second information;
the error-correcting means (42) error-corrects data formed by the first interpolating means (301);
the operating means (47) obtains a difference between the data error-corrected by the error-correcting means (42) and the pre-error-corrected data;
the storing means (43) stores data of the difference obtained by the operating means (47); and
the controlling means (28) controls chase combining of the first and second information formed by the second interpolating means (301), with the data stored in the storing means (43), and inputs the data obtained by the chase combining to the error-correcting means (42).
